# EUROPEAN PATENT SPECIFICATION

(11) **EP 0 942 181 B1**
(45) Date of publication and mention of the grant of the patent: **05.11.2003**
(21) Application number: 99301657.5
(22) Date of filing: 05.03.1999
(51) Int. Cl.: F16B 35/04, F16B 33/02

(54) **Anti-cross threading fastener**
Selbstzentrierende Schraubbefestigung
Elément de fixation fileté empêchant l'engagement de travers

(30) Priority: 11.03.1998 US 38462; 28.07.1998 US 124169
(43) Date of publication of application: 15.09.1999
(73) Proprietor: ILLINOIS TOOL WORKS INC., Glenview, Illinois 60025 (US)
(72) Inventor: Savoji, Seina, Hoffman Estates, Illinois 60195 (US)
(74) Representative: Rackham, Stephen Neil

(56) References cited:
- WO-A-98/13606
- US-A- 3 643 543
- US-A- 3 643 722
- US-A- 4 261 402
- US-A- 5 209 622
- US-A- 5 609 455

## Description

The invention relates generally to threaded fasteners, and more particularly to improved anti-cross threading fasteners.

Threaded fasteners of the type including a helically threaded shaft portion are known generally and used widely. These include various threaded shaft members about which a nut or other member having a complementary threaded bore is installable. Threaded shaft members are formed often as bolts with a tool engagable end, or wrenching surface, to which a torque is applied for installation, but more generally may include any threaded shank protruding from an article or machine for receiving a nut. Other threaded fasteners are formed as double ended studs having screw threads formed on opposing end portions thereof.

It is known generally that threaded fasteners have a tendency to cross-thread during assembly as the fasterner according to US-A-5 609 455. Cross-threading occurs generally due to angular and axial misalignment between the threaded shaft and threaded bore during assembly. Cross-threading is particularly troublesome for unskilled laborers and in automated assembly operations, resulting in reduced productivity and damaged components, which are generally not reusable. The problems associated with cross-threading have been recognized by others, and efforts have been made to eliminate or at least reduce the occurrence thereof.

US-A-3,828,604 discloses a method for making threaded fasteners having a curved tip portion which facilitates assembly thereof in a threaded bore.

WO-A-97/04241 discloses a fastener with two or more relatively narrow diameter and curved transitional threads, which may reduce cross-threading when angular and axial misalignment is not excessive. The threaded shaft portion proximate the tip end thereof limits the angular misalignment for which the curved transitional threads compensate. In other embodiments disclosed in it a non-threaded fastener tip end, or dog point, portion having a reduced diameter similarly limits the misalignment for which the curved transitional threads compensate.

The present invention is drawn toward advancements in the art of threaded fasteners generally, and more particularly to novel improvements in anti-cross threading fasteners including bolts, screws and other threaded shaft members.

The anti-cross threading fastener according to the invention comprises
a shaft portion having an axial dimension and a leading end;
first screw threads formed on a portion of the shaft portion, the first threads having a major diameter, a minor diameter, and a first flank angle; and,
second screw threads formed on a portion of the shaft proximate the leading end, the second threads having two generally planar flanks which converge to form a generally pointed standard machine thread crest, and the second threads having a major diameter less than the major diameter of the first threads, a minor diameter equal to the minor diameter of the first threads, and a second flank angle greater than the first lank angle of the first threads;
wherein a taper angle is defined by a crest of a first thread and a crest of an adjacent second thread and the taper angle is approximately 14 degrees.

The present invention provides novel anti-cross threading fasteners that overcome problems in the prior art, and that are economical. They are easy to assemble, and are relatively consistently and properly installable, and are installable under angular and axial misalignment conditions for which prior art anti-cross threading fasteners do not compensate. Further the fasteners are useable in applications susceptible to cross-threading including assembly by unskilled laborers and especially automated fastener assembly operations.

Particular embodiments in accordance with this invention will now be described with reference to the accompanying drawings; in which:-
FIG. 1 is a partial side view of a threaded fastener according to an exemplary embodiment of the invention;
FIG. 2 is a partial side view of a threaded fastener according to an alternative exemplary embodiment of the invention;
FIG. 3 is a partial sectional view of a threaded fastener according to the present invention misaligned during assembly in a complementarily threaded bore;
FIG. 4 is another partial sectional view of a threaded fastener according to the present invention misaligned during assembly in a complementarily threaded bore;
FIG. 5 is a partial side view of a double ended threaded fastener according to an exemplary embodiment of the present invention;
FIG. 6 is a partially enlarged view of FIG. 5.
FIG. 7 is an end view of a tip end portion of FIG. 5;
FIG. 8 is an alternative leading end portion having features useable in combination with the threaded fastener of FIG. 5;
FIG. 9 is a partial sectional view of a threaded fastener misaligned during assembly in a threaded bore illustrating one other aspect of the invention;
FIG. 10 is partial sectional view of another threaded fastener misaligned during assembly in a threaded bore illustrating a further aspect of the invention.

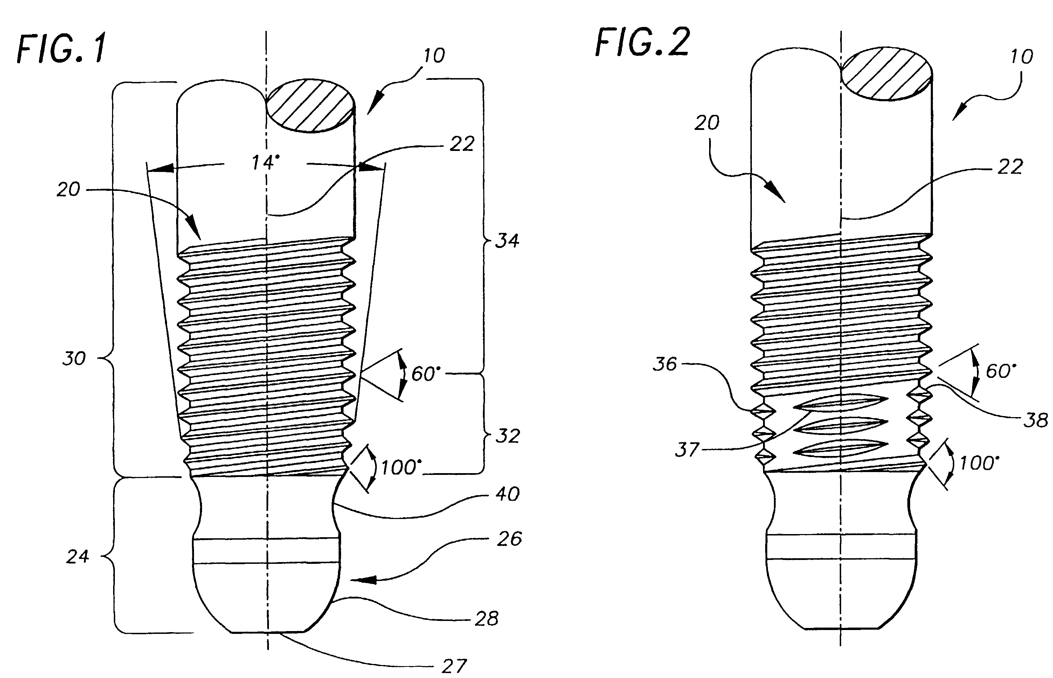

FIGS. 1-4 illustrate an anti-cross threading fastener 10 according to the present invention, which may be the threaded shaft portion of a bolt having a wrenching end, not shown, or more generally any threaded shaft member protruding from an article or machine and threadably engagable in the bore of a nut or other complementarily threaded member.

The anti-cross threading fastener 10 includes generally a shaft 20 having an axial dimension 22 and a leading end portion 24 with a tip portion 26. Screw threads 30 are formed on a portion of the shaft portion 20, wherein the threaded shaft portion 30 has a major diameter and a minor diameter. The minor diameter of the threaded shaft portion 32 may be the same as or less than a root diameter of the shaft portion 34. In one embodiment, the leading end portion 24 of the shaft portion 20 is devoid of screw threads and has a diameter less than the major diameter of the threaded shaft portion 30. And in another embodiment, the leading end portion 24 of the shaft portion devoid of screw threads has a diameter less than the minor diameter of the threaded portion of member 60.

In one embodiment, the tip portion 26 of the shaft portion 20 has an at least partially substantially curved surface 28, which may include a relatively flat end portion 27 as shown in the exemplary embodiment. The substantially curved surface 28 may be a substantially spherical or ellipsoidal or paraboloidal or other irregular curved surface with or without the relatively flat end portion 27. The substantially curved surface 28 facilitates disposing the leading end portion 24 of the shaft portion 20 into the nut or other complementarily threaded member when there is axial and angular misalignment therebetween, and also facilitates aligning the shaft portion 20 with the nut or other complementarily threaded member during installation thereof as discussed further below.

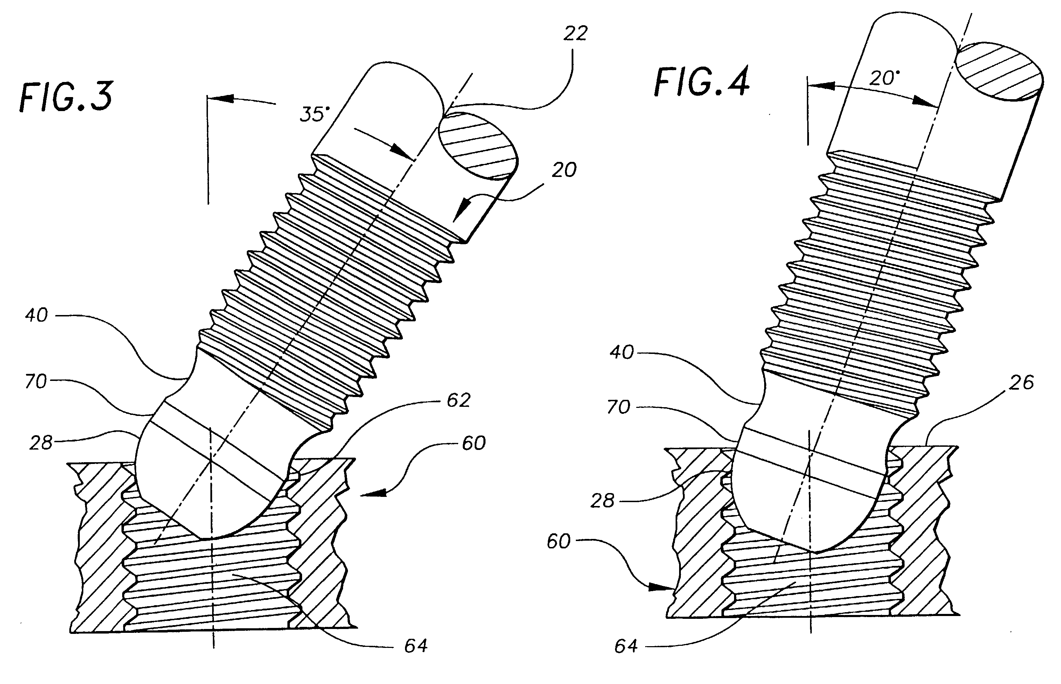

A substantially annular groove 40 is disposed about the shaft portion 20 between the at least partially substantially curved surface 28 of the tip portion 26 and the threaded shaft portion 30. FIG. 3 illustrates the anti-cross threading fastener 10 being disposed in the nut or other complementarily threaded member 60 with a relatively large angular misalignment of approximately 35 degrees therebetween. The substantially annular groove 40 accommodates an annular edge portion 62 of the nut 60, thereby facilitating the initial positioning and retaining of the leading portion 24 of the fastener into the bore 64 of the nut 60 at greater angular misalignments than are possible in the absence of the recess 40. FIGS. 3 and 4 illustrate the at least partially substantially curved surface 28 of the tip portion 26 permitting and facilitating subsequent angular orientation, or pivoting, of the shaft portion axis 22 into angular and axial alignment with an axis of the nut 60. FIG. 4 also illustrates the maximum angular misalignment between the shaft axis 22 and the nut 60, which is approximately 20 degrees in the exemplary embodiment, that is compensable by the anti-cross threading fastener 10 in the absence of the substantially annular recess 40.

FIGS. 1-4 also illustrate a cylindrical shaft portion 70 disposed between the at least partially substantially curved surface 28 of the tip portion 26 and the substantially annular groove 40 disposed about the shaft portion 20. After the shaft portion 20 is substantially aligned axially and angularly with the bore 64 of the nut, the cylindrical shaft portion 70 maintains substantial axial and angular alignment of the shaft portion 20 in the bore 64 of the nut 60 upon insertion of the cylindrical shaft portion 70 into the bore 64.

In one embodiment, the cylindrical shaft portion 70 has an axial dimension corresponding to approximately 1 pitch of the screw threads, and in other embodiments the axial dimension thereof may be somewhat more or less. The axial dimension of the cylindrical shaft portion 70, however, must be sufficiently long to maintain substantial alignment of the shaft portion 20 after insertion of the cylindrical portion 70 thereof into the nut bore 64, yet must not be so long as to interfere with the initial pivotal alignment of a misaligned shaft portion 20 as discussed above in connection with FIGS. 3 and 4.

FIGS 1-4 also illustrate a portion 32 of the threaded shaft portion 30 tapering narrowingly toward the tip portion 26 of the shaft portion 20. In one embodiment, the tapered threaded shaft portion 32 has an axial dimension between approximately 3 and approximately 4 pitches of the screw thread. The tapered threaded shaft portion 32 facilitates alignment of the screw threads 30 with the threaded bore 64 of the nut 60, compensating for modest angular misalignment between the shaft portion 20 and the nut 60 upon insertion of the shaft portion 20 therein and promoting proper' thread engagement therebetween. According to the invention the angle of the taper is approximately 14 degrees.

FIG. 2 illustrates at least some of the screw threads on the tapered threaded shaft portion 32 formed of spaced apart lobes, several of which are identified by numerals 36, 37 and 38, and which are preferably spaced substantially evenly about the circumference of the shaft portion 20. The lobed threaded shaft portion compensates for even greater degrees of misalignment between the shaft portion 20 and the nut 60 after insertion of the shaft portion therein and promotes proper thread engagement therebetween than would be compensable without the lobed threads.

FIGS. 1 and 2 illustrate the screw threads of the tapered threaded shaft portion 32 having a flank angle greater than a flank angle of the screw threads of the remaining non-tapered threaded shaft portion 34. The flank angle of the tapered threaded shaft portion 32 increases toward the tip portion 26 of the shaft portion 20. In the exemplary embodiment, the flank angle of the non-tapered threaded shaft portion 34 is approximately 60 degrees, and as the diameter of the threaded shaft portion 32 decreases toward the end 27 the flank angle thereof increases to approximately 100 degrees. The increasing flank angle of the tapered threaded shaft portion 32 also facilitates alignment of the screw threads 30 with the threaded bore 64 of the nut 60, further compensating for modest angular misalignment between the shaft portion 20 and the nut 60 after insertion of the shaft portion 20 therein and further promoting proper thread engagement therebetween, thereby further increasing the effectiveness with which the threaded shaft portion 30 is properly threadably engaged with the threaded bore 64 of the nut 60.

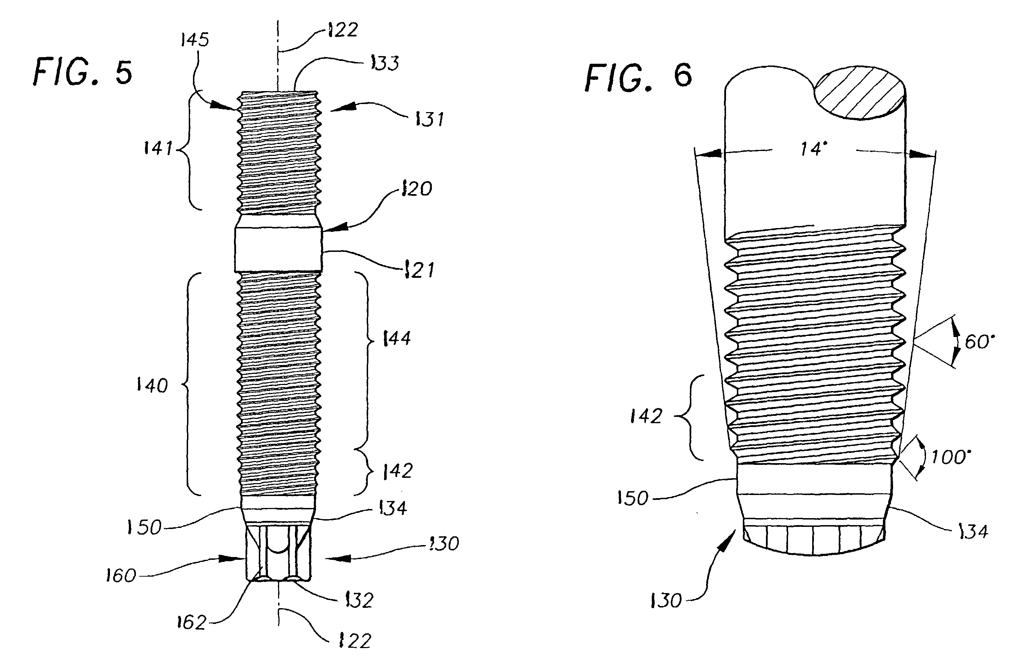

FIG. 5 illustrates an anti-cross threading fastener 10, which in the exemplary embodiment is a double ended shaft fastener having opposing threaded end portions, each of which are engageable with a threaded bore disposed in or though a nut or other body member. The invention is also applicable to many other threaded fasteners, for example threaded bolts having a wrenching end, and threaded shaft members protruding from articles and machines. The invention is applicable, more generally, to any threaded shaft member engagable with a threaded bore.

FIG. 5 illustrates the anti-cross threading fastener 110 comprising generally a shaft portion 120 having an axial dimension 122. The shaft portion 120 includes generally at least one leading end portion, and in the exemplary double ended threaded shaft fastener of FIG. 5 the shaft portion 120 includes a first leading end portion 130 with corresponding a first end 132 and an opposing second leading end portion 131 with a corresponding second end 133.

The fastener 110 comprises screw threads, having a major diameter and a minor diameter as is typical of screw threads, forming generally one or more threaded shaft portions on the shaft portion 120. In FIG. 5, screw threads on the shaft portion 120 form a first threaded shaft portion 140 proximate the first end 132 thereof, and a second threaded shaft portion 141 proximate the second end 133 thereof. The second threaded shaft portion 141 extends axially along the second leading end portion 131 to the second end 133. In FIG. 5, the shaft portion 120 of the double ended shaft fastener includes a non-threaded intermediate cylindrical portion 121 disposed between the first and second threaded shaft portions 140 and 141 thereof.

Generally, a tapered threaded shaft portion is formed preferably on the threaded shaft portion proximate the end of the shaft portion, whereby the threaded shaft portion includes a remaining non-tapered threaded shaft portion. The tapered threaded shaft portion narrows axially in the direction of, or toward, the leading end portion of the shaft portion. And in embodiments where the leading end portion is also threaded, the tapered threaded shaft portion narrows axially toward the end of the shaft portion.

FIGS. 5 and 6 illustrate a first tapered threaded shaft portion 142 formed on the first threaded shaft portion 140 proximate the first end 132 of the shaft portion 120, whereby the first threaded shaft portion 140 includes a first remaining non-tapered threaded shaft portion 144. The first tapered threaded shaft portion 142 narrows axially toward the first leading end portion 130 of the shaft portion 120. The second threaded shaft portion 141 also has a corresponding second tapered threaded shaft portion 145 formed thereon narrowing toward the second end 133 thereof, and a second remaining non-tapered threaded shaft portion, as discussed above.

In FIGS. 5 and 6, the tapered threaded shaft portion has an axial dimension corresponding to between approximately 3 and approximately 4 pitches of the screw thread, although this axial dimension is exemplary and is not intended to be limiting. The tapered threaded shaft portion tapers generally as taper angle in a range between approximately 10 degrees and approximately 20 degrees. In the exemplary embodiment of FIG.6, the taper angle of the first tapered threaded shaft portion 142 is approximately 14 degrees.

Generally, the screw threads of the tapered threaded shaft portion have a flank angle greater than a flank angle of the screw threads of the remaining non-tapered threaded shaft portion. The flank angle of the tapered threaded shaft portion increases generally with decreasing diameter of the tapered threaded shaft portion toward the end of the fastener.

In FIG. 6, the flank angle of the first non-tapered threaded shaft portion 144 is approximately 60 degrees, and the flank angle of the first tapered threaded shaft portion 142 increases from approximately 60 at the interface with the first non-tapered threaded shaft portion 144 to approximately 100 degrees at the most narrow diameter of the first tapered threaded shaft portion 142 toward the first end 132. The screw threads of the tapered threaded shaft portion 142 have preferably the same pitch as the screw threads of the non-tapered threaded shaft portion 144.

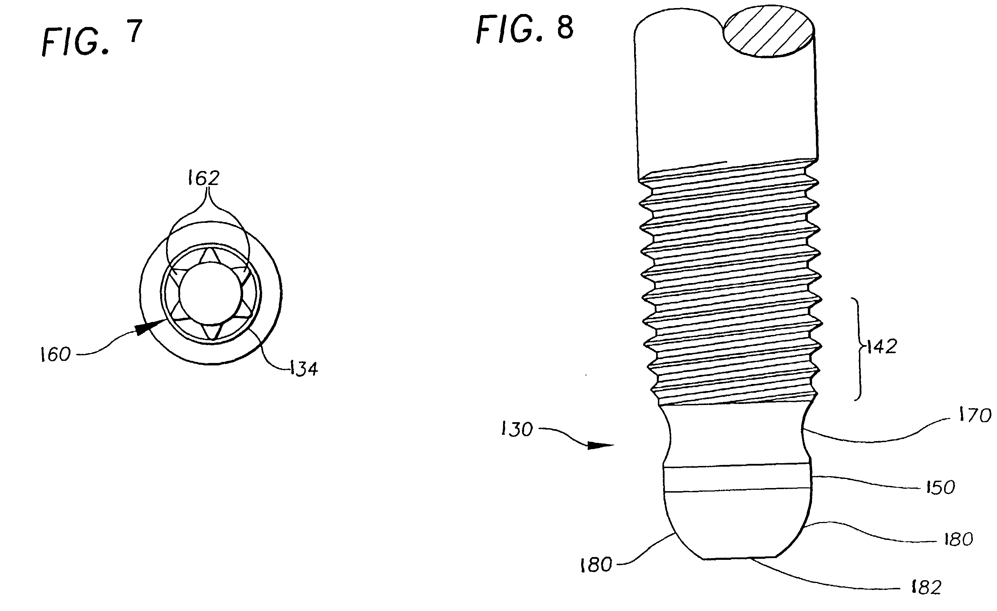

FIG. 5 illustrates a cylindrical shaft portion 150 disposed generally between the first end 132 and the first threaded shaft portion 140, and FIG. 6 illustrates the cylindrical shaft portion 150 located preferably adjacent the first tapered threaded shaft portion 142. The cylindrical shaft portion 150 is also preferably devoid of screw threads, and has a diameter preferably not greater than the minor diameter of the threaded shaft portion 140. In the exemplary embodiment of FIG. 8, the cylindrical shaft portion 150 has an axial dimension corresponding to approximately 1 pitch of the screw threads, and in other embodiments the axial dimension thereof may be more or less, depending on the particular application. The axial dimension of the cylindrical shaft portion 150 is preferably sufficiently long to maintain substantial alignment of the shaft portion 120 in the threaded bore, yet must not be so long as to interfere with the initial pivotal alignment of a misaligned shaft portion 120, as discussed further below.

Generally, in embodiments where the leading end portion is devoid of screw threads, or unthreaded, the leading end portion has a diameter less than the major diameter of the threaded shaft portion 140, and preferably less than or equal to, or not greater than, the minor diameter of the threaded shaft portion 140.

FIGS. 5 and 7 illustrate the first leading end portion 130 devoid of screw threads and further comprising a first tip portion with a driving tool engagement end, or wrenching surface 160. In the exemplary embodiment illustrated in FIGS. 5 and 6, the wrenching surface 160 has multiple lobes 162 protruding radially outwardly. In alternative embodiments, however, the wrenching surface 160 has other configurations, for example a hex or a generally polygonal inner or outer surface, as is known generally. FIGS. 5-7 illustrate the leading end portion 130 having a diameter less than the minor diameter of the threaded shaft portion 140, and the first leading end portion 130 including a non-threaded tapered portion 134 narrowing axially from the cylindrical shaft portion 150 toward the wrenching surface 160, thus providing the reduced diameter.

FIG. 8 illustrates an alternative leading end portion 130 having a substantially annular groove 170 disposed about the shaft portion between the threaded shaft portion and the cylindrical shaft portion 150. The substantially annular groove 170 is concave and has a generally curved shape. The substantially annular groove 170 is disposed preferably adjacent the first tapered threaded shaft portion 142 and adjacent the cylindrical shaft portion 150. The substantially annular groove 170 has generally a diameter less than the minor diameter of the threaded shaft portion. And when used in combination with a cylindrical shaft portion 150, the substantially annular groove 170 preferably has a diameter less than the diameter of the cylindrical shaft portion 150. The substantially annular groove 170 has an axial dimension in a range corresponding to between approximately 1 and approximately 2 pitches of the screw thread.

FIG. 8 also illustrates the first leading end portion 130 having a tip portion with an at least partially substantially curved surface 180, which may include a relatively flat end 182, corresponding to one of the first and second ends 132 and 133 illustrated in FIG. 5. The substantially curved surface 180 may be a substantially spherical or ellipsoidal or paraboloidal or other irregularly curved surface with or without the relatively flat end portion 182. In FIG. 8, the substantially curved surface 180 is adjacent a cylindrical shaft portion 150. The substantially curved surface 180 may be disposed directly adjacent the cylindrical shaft portion 150 of FIGS. 5 and 6 in place of the wrenching surface 160, with or without the annular groove portion 170.

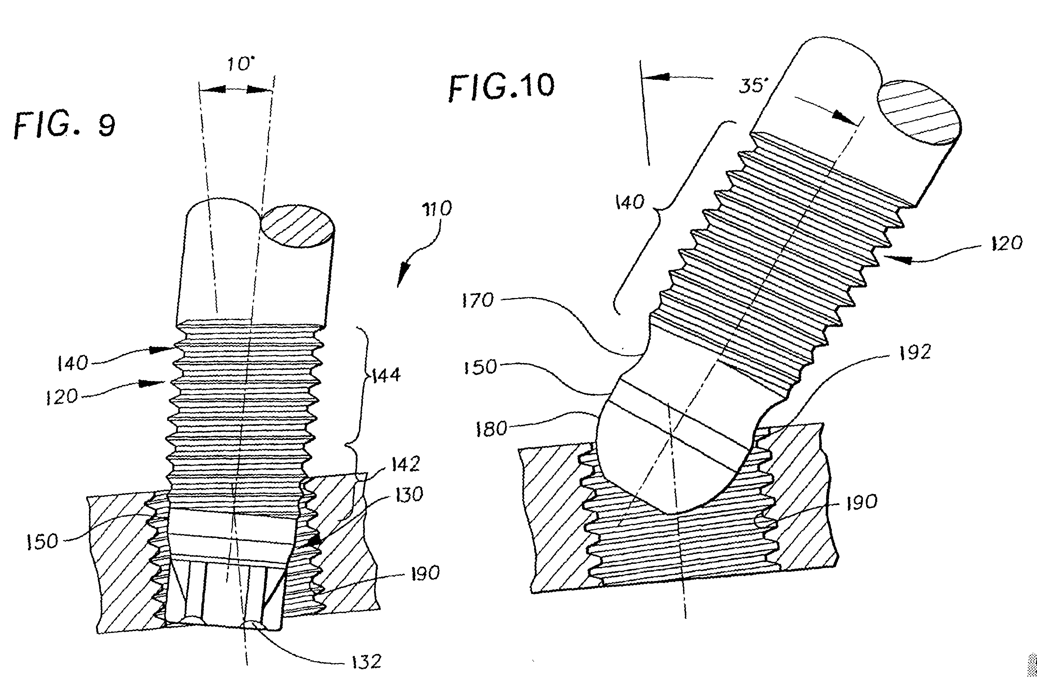

FIG. 9 illustrates the fastener 110 and more particularly the first leading end portion 130 thereof disposed in a threaded bore 190, which is disposed at least partially into or fully through a nut or some other body member. The first leading end portion 130 is devoid of screw threads and has a diameter less than or equal to the major diameter, and preferably not greater than the minor diameter thereof. Thus the fastener leading end portion 130 is relatively easily disposable in the threaded bore 190.

FIG. 9 illustrates the cylindrical shaft portion 150 generally guiding the shaft portion 120 into the threaded bore 190. As the leading end portion 130 is disposed further into the threaded bore 190, the cylindrical shaft portion 150 increasingly angularly aligns the shaft portion 120 axially with the threaded bore 190 until the tapered threaded shaft portion 142 begins to enter the threaded bore 190.

As the tapered threaded shaft portion 142 enters the threaded bore 190, the tapered threaded shaft 142 facilitates further axial alignment of the fastener shaft 120 with the threaded bore 190 and promotes proper thread engagement therebetween. More particularly, the tapered threaded shaft portion 142 compensates for modest angular misalignment between the threaded shaft portion 140 and the threaded bore 190 upon continued insertion of the tapered threaded shaft portion 142 into the bore 190.

The increasing flank angle of the tapered threaded shaft portion 142 toward the end 132 of the fastener 110 facilitates the formation of the tapered threaded portion 142 on the threaded shaft portion 140, and provides a relatively continuous transition between the tapered threaded shaft portion 142 and the cylindrical shaft portion 150. The first tapered threaded shaft portion 142 is particularly effective for axial alignment and proper engagement with the threaded bore 190 when the screw thread pitch on the tapered threaded shaft portion 142 is the same as the screw thread pitch on the remaining non-tapered threaded shaft portion 144, as discussed above in connection with a preferred exemplary embodiment.

In the exemplary embodiment, the axial dimension of the cylindrical shaft portion 150 is approximately 1 pitch of the screw threads, and the taper angle of the tapered threaded shaft portion 142 is approximately 14 degrees, as discussed above. The range of angular misalignment compensated by this exemplary fastener configuration is in a range between approximately 0 degrees and approximately 10 degrees. This exemplary angular misalignment compensation range, however, is not intended to be limiting, since the range is dependent generally on the taper angle of the tapered threaded shaft portion 142 and on the axial dimension, or length, of the cylindrical shaft portion 150 and the leading end portion 130, which are both subject to change depending on the specific requirements of the particular application.

FIG. 10 illustrates the first leading end portion 130 of the fastener disposed in a threaded bore 190. The substantially curved surface 180 facilitates adjusting the axial and angular alignment of the fastener shaft portion 120 relative to the threaded bore 190, particularly when the initial misalignment therebetween is substantial. More particularly, the substantially curved surface 180 facilitates initial pivotal adjustment or alignment of the shaft portion 120 in the threaded bore 190 to compensate for misalignment therebetween during the initial insertion of the leading end portion 130 into the threaded bore 190. The substantially curved surface 180 permits compensation for as much as 130 degrees or more of angular misalignment between the shaft portion 120 and the threaded bore 190. As the leading end portion 130 of the fastener 110 is aligned more fully with and inserted farther into the threaded bore 190, the cylindrical shaft portion 150 and the tapered threaded shaft portion 142 enter the threaded bore and provide still further, more accurate alignment therebetween as discussed above.

The substantially annular groove 170, which preferably has a diameter less than the minor diameter of the threaded shaft portion 140, compensates for still greater initial angular misalignment between the shaft portion 120 and the threaded bore 190. More particularly, the substantially annular groove 170 accommodates an annular edge portion 192 of the threaded bore 190, thereby permitting relatively increased initial angular misalignment between the shaft portion 120 and the threaded bore 190, for example approximately 35 degrees in the exemplary embodiment of FIG. 10, although this angle may be more or less depending on the axial length and diameter of the substantially annular groove 170. The curved surface of the substantially annular groove 170 facilitates adjusting the axial and angular alignment between the shaft portion 120 and the threaded bore 190 by providing a relatively continuous engagement surface along the axial dimension of the shaft portion 120 for the annular edge portion 192 during pivotal adjustment of the fastener shaft 120. The substantially annular groove 170 is particularly effective when used in combination with the substantially curved surface 180. The substantially annular groove 170 thus permits initial adjustment of the fastener 110 relative to the threaded bore 190 at least until other features of the invention, for example the cylindrical shaft portion 150 and/or the tapered threaded shaft portion 142, are operable to further align and more fully engage the fastener shaft portion 120 with the threaded bore 190 as discussed above.

## Claims

1. An anti-cross threading fastener comprising:
a shaft portion (20) having an axial dimension and a leading end (27) ;
first screw threads (30) formed on a portion of the shaft portion (20), the first threads (30) having a major diameter, a minor diameter, and a first flank angle; and,
second screw threads (32,36,37,38) formed on a portion of the shaft (20) proximate the leading end, the second threads (32) having two generally planar flanks which converge to form a generally pointed standard machine thread crest, and the second threads (32,36,37,38) having a major diameter less than the major diameter of the first threads (30), a minor diameter equal to the minor diameter of the first threads (30), and a second flank angle greater than the first flank angle of the first threads (30);
wherein a taper angle is defined by a crest of a first thread (30) and a crest of an adjacent second thread (32,36,37,38) and the taper angle is approximately 14 degrees.

2. A fastener according to claim 1, wherein said a second screw thread is formed by spaced apart lobes (36,37,38).

3. A fastener according to claim 1 or 2, wherein the first flank angle is approximately 60 degrees and the second flank angle is approximately 100 degrees.

4. A fastener according to any one of the preceding claims, wherein there are between approximately 3 and 4 pitches of the second screw threads (32,36,37,38).

5. A fastener according to any one of the preceding claims, wherein the flank angle increases towards the lead end.

6. A fastener according to any one of the preceding claims, wherein the leading end has a tip (26) devoid of screw threads and a diameter less than the minor diameter of the first (30) and second (32) screw threads.

7. A fastener according to claim 6, wherein the tip (26) has a substantially curved surface (28).

8. A fastener according to claim 6 or 7, wherein the tip (26) has an annular groove (40) with an inner diameter less than the minor diameter of the first and second screw threads

9. A fastener according to claim 6 or 7, wherein the tip (26) has a cylindrical section (150) having a diameter less than the minor diameter of the first and second screw threads (30,32) and an axial dimension equal to approximately 1 pitch of the first and second screw threads (30,32).

10. A fastener according to any one of the preceding claims, having a tip (26) comprised of an end (28) having a substantially curved surface, a cylindrical section (70) adjacent the end (28) and having a diameter less than the minor diameter of the first and second screw threads (30,32), an annular groove (40) disposed between the cylindrical section (70) and the second threads (32), the annular groove (70) having an inner diameter less than the diameter of the cylindrical section (70).

## Patentansprüche

1. Selbstzentrierendes Gewinde-Befestigungselement, beinhaltend:
einen Schaft-Abschnitt (20), welcher eine axiale Abmessung und ein vorderes Ende (27) hat;
erste Schraubengewindegänge (30), die auf einem Abschnitt des Schaft-Abschnittes (20) gebildet sind, wobei die ersten Gewindegänge (30) einen Außendurchmesser, einen Innendurchmesser und einen ersten Flankenwinkel haben; und,
zweite Schraubengewindegänge (32, 36, 37, 38), die auf einem Abschnitt des Schaftes (20) nahe dem vorderen Ende gebildet sind, wobei die zweiten Gewindegänge (32) zwei allgemein ebene Flanken aufweisen, die zusammenlaufen, um einen allgemein spitz zulaufenden Standard-Maschinengewinde-Gewinderücken zu bilden, und wobei die zweiten Gewindegänge (32, 36, 37, 38) einen Außendurchmesser, welcher geringer ist als der Außendurchmesser der ersten Gewindegänge (30), einen Innendurchmesser, der gleich ist wie der Innendurchmesser der ersten Gewindegänge (30), und einen zweiten Flankenwinkel aufweisen, welcher größer ist als der erste Flankenwinkel der ersten Gewindegänge (30);
wobei ein Kegelwinkel durch einen Gewinderücken eines ersten Gewindeganges (30) und einen Gewinderücken eines benachbarten zweiten Gewindeganges (32, 36, 37, 38) definiert wird, und der Kegelwinkel ungefähr 14 Grad beträgt.

2. Befestigungselement nach Anspruch 1, wobei der zweite Schraubengewindegang durch beabstandete Nocken (36, 37, 38) gebildet ist.

3. Befestigungselement nach Anspruch 1 oder 2, wobei der erste Flankenwinkel ungefähr 60 Grad beträgt, und der zweite Flankenwinkel ungefähr 100 Grad beträgt.

4. Befestigungselement nach irgendeinem der vorangehenden Ansprüche, wobei die zweiten Schraubengewindegänge (32, 36, 37, 38) zwischen ungefähr 3 und 4 Gewindesteigungen aufweisen.

5. Befestigungselement nach irgendeinem der vorangehenden Ansprüche, wobei der Flankenwinkel zu dem vorderen Ende hin zunimmt.

6. Befestigungselement nach irgendeinem der vorangehenden Ansprüche, wobei das vordere Ende eine Spitze (26) hat, welche frei von Schraubengewindegängen ist, und einen Durchmesser hat, welcher geringer ist als der Innendurchmesser der ersten (30) und der zweiten (32) Schraubengewindegänge.

7. Befestigungselement nach Anspruch 6, wobei die Spitze (26) eine, im Wesentlichen gekrümmte Oberfläche (28) hat.

8. Befestigungselement nach Anspruch 6 oder 7, wobei die Spitze (26) eine ringförmige Rinne (40) mit einem Innendurchmesser hat, welcher geringer als der Innendurchmesser der ersten und zweiten Schraubengewindegänge ist.

9. Befestigungselement nach Anspruch 6 oder 7, wobei die Spitze (26) einen zylindrischen Abschnitt (150) hat, welcher einen Durchmesser hat, der geringer als der Innendurchmesser der ersten und zweiten Schraubengewindegänge (30, 32) ist, und eine axiale Abmessung hat, die ungefähr einer Gewindesteigung der ersten und zweiten Schraubengewindegänge (30, 32) entspricht.

10. Befestigungselement nach irgendeinem der vorangehenden Ansprüche, welches eine Spitze (26) hat, die ein Ende (28) aufweist, das eine im Wesentlichen gekrümmte Oberfläche hat, einen zylindrischen Abschnitt (70), der an das Ende (28) angrenzt und einen Durchmesser hat, der geringer als der Innendurchmesser der ersten und zweiten Schraubengewindegänge (30, 32) ist, und eine ringförmige Rinne (40) hat, welche zwischen dem zylindrischen Abschnitt (70) und den zweiten Gewindegängen (32) angeordnet ist, wobei die ringförmige Rinne (70) einen lnnendurchmesser hat, der geringer als der Durchmesser des zylindrischen Abschnitts (70) ist.

## Revendications

1. Attache à filetage anti-déformation comprenant:
une partie tige (20) ayant une dimension axiale et une extrémité avant (27);
des premiers filets (30) formés sur une portion de la partie tige (20), les premiers filets (30) ayant un diamètre extérieur, un diamètre intérieur et un premier angle de flanc; et
des seconds filets (32, 36, 37, 38) formés sur une portion de la tige (20) proche de l'extrémité avant, les seconds filets (32) ayant deux flancs globalement plans qui convergent pour former un sommet de filet standard globalement pointu, et les seconds filets (32, 36, 37, 38) ayant un diamètre extérieur inférieur au diamètre extérieur des premiers filets (30), un diamètre intérieur égal au diamètre intérieur des premiers filets (30), et un second angle de flanc supérieur au premier angle de flanc des premiers filets (30);
dans laquelle un angle de conicité est défini par un sommet d'un premier filet (30) et un sommet d'un second filet adjacent (32, 36, 37, 38) et l'angle de conicité est d'environ 14 degrés.

2. Attache selon la revendication 1, dans laquelle lesdits seconds filets sont formés par des lobes espacés l'un de l'autre (36,37,38).

3. Attache selon la revendication 1 ou 2, dans laquelle le premier angle de flanc est d'environ 60 degrés et le second angle de flanc est d'environ 100 degrés.

4. Attache selon l'une quelconque des revendications précédentes, dans laquelle il existe entre environ 3 et 4 pas des seconds filets (32, 36, 37, 38).

5. Attache selon l'une quelconque des revendications précédentes, dans laquelle l'angle de flanc croît vers l'extrémité avant.

6. Attache selon l'une quelconque des revendications précédentes, dans laquelle l'extrémité avant présente une pointe (26) dépourvue de filets et un diamètre inférieur au diamètre intérieur des premiers (30) et seconds filets (32).

7. Attache selon la revendication 6, dans laquelle la pointe (26) a une surface substantiellement courbe (28).

8. Attache selon la revendication 6 ou 7, dans laquelle la pointe (26) comporte une gorge annulaire (40) ayant un diamètre intérieur inférieur au diamètre intérieur des premiers et seconds filets.

9. Attache selon la revendication 6 ou 7, dans laquelle la pointe (26) comprend une section cylindrique (150) ayant un diamètre inférieur au diamètre intérieur des premiers et seconds filets (30, 32) et une dimension axiale égale à environ 1 pas des premiers et seconds filets (30, 32).

10. Attache selon l'une quelconque des revendications précédentes, ayant une pointe (26) constituée d'une extrémité (28) ayant une surface substantiellement courbe, d'une section cylindrique (70) adjacente à l'extrémité (28) et ayant un diamètre inférieur au diamètre intérieur des premiers et seconds filets (30, 32), d'une gorge annulaire (40) placée entre la section cylindrique (70) et les seconds filets (32), la gorge annulaire (40) ayant un diamètre intérieur inférieur au diamètre de la section cylindrique (70).
